# EUROPEAN PATENT SPECIFICATION

(11) **EP 2 732 730 B1**
(45) Date of publication and mention of the grant of the patent: **09.01.2019**
(21) Application number: 13154854.7
(22) Date of filing: 11.02.2013
(51) Int. Cl.: A47F 3/00, A47F 11/10

(54) **Lighting unit for a display shelf**
Beleuchtungseinheit für eine Regalauslage
Unité d'éclairage pour un présentoir

(30) Priority: 16.11.2012 EP 12193035
(43) Date of publication of application: 21.05.2014
(73) Proprietor: Diam UK Ltd, Leicestershire LE11 5XS (GB)
(72) Inventor: Kerr, Eamonn, Loughborough Leicestershire LE11 5XS (GB); Mansell, Peter, Loughborough Leicestershire LE11 5XS (GB); Allen, Martin, Loughborough Leicestershire LE11 5XS (GB)
(74) Representative: Oxley, Robin John George

(56) References cited:
- DE-U1-202006 004 865
- IE-A1- 20 050 871
- US-A1- 2005 082 450
- US-A1- 2011 204 009

## Description

This invention relates a lighting unit for display shelves, in particular to a lighting unit of sale display shelving for use in the cosmetics sector.

Display shelves in the retail sector are designed to improve the visual appeal for the customer. This is believed to enhance the product offering for open sale /free access items. Branding is particularly important in the cosmetics sector where purchase decisions are often made at the point of purchase and accordingly it is important to create as visually striking point of display as possible.

Display stands that have a rigid shelf system equipped with shelf modules for carrying and presenting cosmetics in an ordered fashion are well known in the retail environment. It is also well known for such stands to include graphic panels at their outer edges.

As many cosmetics also trade on their clinical elements displays are preferred to have a very clean look to them and as such good lighting of the products on display is important. However, the use of excessive lighting is not only harmful to the environment in terms of energy consumption but also creates heat which may, over time, soften cosmetic products, particularly those close to the lights. This may be particular problematic with such products as lipsticks and other cosmetics which include waxes and/or oils.

US 2005/082450 A1 discloses a modular bracket system for attachment to shelf edges, for example on gondolas in retail premises. The US 2005/082450 A1 bracket includes adjustable quick fit locking means that can grip a wide variety of different shelf edge profiles, and may be used with various accessory components that are slidably received in elongate sections of the bracket.

US 2011/204009 A1 discloses a retail display shelf system having a gondola and a pair of conductive standards which are cooperatively configured for supporting conductive shelf support brackets.

IE 20 050 871 A1, with the title 'display cabinet illumination', discloses an illuminator having two lines of LEDs on inwardly-directed faces of an elongate body which forms a mullion for a display cabinet.

DE 202006004865U discloses a lighting unit attachable to the front of a display shelf. The lighting unit comprises a substantially rectangular diffuser providing for a recessed channel adjacent to and substantially extending along the lower edge of the diffuser. A lighting element, comprising a plurality of light emitting diodes, is located in said recessed channel. The lighting unit also comprises a transparent cover located over the diffuser and defining a gap there between for receiving a display graphic.

It is the object of the present invention to provide a new lighting unit for a cosmetic display that at assists in mitigating the above mentioned problems with known designs. According to a first aspect of the invention there is provided a lighting unit, as defined in claim 1, for the front edge of a display shelf, the lighting unit comprising: a transparent or translucent elongate diffuser comprising an elongate upper edge, an elongate lower edge, an elongate front face and an elongate rear face, said diffuser having a recessed channel adjacent to and substantially extending along one of the elongate upper and lower edge; a lighting element located in said recessed channel, said lighting element comprising a plurality of light emitting diodes attached to a circuit board to form a light strip, wherein the light emitting diodes are oriented to direct light from said recess through said diffuser in a direction from one elongate edge towards the other elongate edge; and a substantially transparent elongate cover located over the diffuser and defining a gap there between for receiving a display graphic; wherein said diffuser scatters a portion of the light passing therethrough towards the cover so as to, in use, back light a display graphic in said gap; a portion of the light is directed by said lighting unit in a generally downward direction.

Preferably, the portion of the light, directed by said lighting unit in a downward direction comprises reflected light.

In embodiments, the diffuser additionally transmits a portion of the light passing therethrough to be emitted at the elongate upper edge thereof.

The invention enables a single light emitting diode (LED) strip light to provide multiple lighting to a product display, for example a cosmetics display. The lighting can provide an illuminated graphic which can include the brand name and an image, can provide down lighting to products displayed on a shelf below the shelf to which the lighting unit is applied, and can optionally also provide up-lighting to the fronts of products on the shelf to which the lighting unit is applied.

In one embodiment the LED's are side emitting LED's that emit light from one side thereof and the light strip can be arranged in the recess adjacent the elongate lower edge and in an orientation such that the light emitting side of the diodes are directed towards the upper edge. The up-lighting effect is produced by the light passing through the diffuser and exiting the top edge, the back lighting of the graphic is produced by the diffusion of some of the light as it passes through the diffuser, and the down lighting effect is produced buy a combination of sideways light bleed, refraction and reflection as the light passes emits from the LED's and passes into the diffuser from the channel. The circuit board of the LED's is preferably white or reflective and assists in reflecting light in a downwards direction.

In embodiments, one face of the diffuser is provided with a surface texture to increase the amount of light scattered towards the cover. The surface texture can, for example, comprise a plurality of ridges. The ridges could be triangular, square, curved or another suitable shape. Alternatively the surface texture could comprise a three dimensional pattern on one face of the diffuser. The pattern can be provided on the rear face of the diffuser.

Optionally a reflective panel or strip, for example silver or white, can be attached to t one or more of the elongate rear face and the elongate lower edge of the diffuser to decrease any light loss therethrough.

In embodiments, the diffuser comprises a first material comprising a polymer containing particles of a second transparent or translucent material having a different refractive index than the first material. In this manner the different refractive indexes assist in the scattering of light as it passes therethrough, which assists in the backlighting of a graphic placed in the gap.

In embodiments, the lighting unit comprises a hinge adjacent the elongate upper edge that enables the diffuser and cover to be pivoted upwards from a display position to a service position. A support structure is provided to which the diffuser and cover are attached by the hinge. With the diffuser and cover in the display position, the support structure supports said diffuser and cover at an incline.

The display position is its normal in use position and the service position is a position it can be moved into for service, for example stock taking and restocking. Preferably an information panel is provided pivotally attached to the lighting display towards a lower edge thereof. The information panel can be pivotal such that in the display position it is located behind the diffuser and is obstructed from view, and in the service position the information panel can be pivoted downwards to present service information to a user. The information panel preferably includes channels therein for receiving paper or card containing printed indicia, for example alphanumeric data, barcodes, QR keys etc, that can be read or scanned by electronic equipment and which relates to the product on the shelf. In one preferred arrangement the information panel is pivotally attached to the rear surface of the diffuser by means of a live hinge, at a position inward of the recess.

In one embodiment the lighting strip is attached to, and extends from, the support element in a position such that, when the lighting element is in its display position the lighting strip extends from said support structure into the recessed channel in the diffuser.

The diffuser tapers in a direction from one elongate edge to the other elongate edge in particular. The taper is oriented so that the thickness of the diffuser reduces with distance from the light strip. The front face of the diffuser can be substantially perpendicular to the light strip and the rear face of the diffuser can taper towards the front edge of the diffuser. In this way some of the light passing through the diffuser in a direction from the light source to the elongate edge spaced therefrom will encounter the rear tapered face and at least part of the light will be reflected therefrom back into the diffuser towards the front face to increase the light emitted from that front face.

Also described herein is a shelf tray, which is not part of the invention, for displaying products on a shelf, said shelf tray comprising: a support structure comprising a front section having location means for alignment, in use, with the front edge and the top surface of a shelf; and a lighting unit attached to said support structure; wherein said lighting unit partially overhangs the front section of the shelf tray. The support structure allows for tray alignment on the shelves and the overhang permits the light being emitted downwards to illuminate the top of articles placed on a shelf beneath the lit shelf. The lighting unit can be pivotally attached to the shelf tray, and the shelf tray front section can comprise a lighting unit support structure to support said lighting unit at an incline. The incline presents the graphic display so as to be easily read by a consumer and also directs the up-lighting in a backwards direction towards the product on the display shelf.

In one arrangement the shelf tray further comprises: joining means at either edge thereof for attachment to other shelf trays, bus bar power distribution tracks running substantially along its length for electrical connection with an adjacent shelf tray; and electrical connection means for connecting the lighting element to the bus bar for the supply of electricity thereto. In this manner a modular shelving system can be provided that also includes an integrated power supply to the lighting units so that they do not each need to be individually connected to a source of electricity, for example by flying leads. In one arrangement the shelf tray may include a recess therein in which the bus bar is exposed such that, in use, display modules placed on the shelf tray can be located so as to extend into said recess to electrically connect to said bus bars. In a preferred arrangement, accessories may alternatively be powered by a shoe provided to pick up power in the track and transmit the power to the accessory via a flying lead, rather than by direct transmission to any contacts in the accessory body.

Also described herein is a display unit not according to the invention comprising a support structure supporting a plurality of shelves, and a plurality of shelf trays on each said shelf. When used with the shelf trays having the integral bus bar as described above, the display unit may further comprise an end panel attached to the end of at least one of the shelf trays, the end panel can comprise an electrical connector on one face thereof for connection to the bus bar. A further electrical connector can be attached thereto for connection to a source of electricity.

According to a second aspect of the invention there is provided a shelf, as defined in claim 12, for displaying products, said shelf comprising: a substantially horizontal platform and a lighting unit according to the first aspect of the invention; wherein the lighting unit at least partially overhangs the front section of the shelf substantially horizontal platform. It will be appreciated that the substantially horizontal platform can be angled at a slight incline relative to the horizontal, or can be stepped with substantially horizontal areas, such that it is capable of retaining products on display without them sliding forward and of the front of the shelf. In embodiments, the shelf comprises a shelf tray to which the support structure of the lighting unit is attached, said shelf tray received on said shelf.

According to a third aspect of the invention there is provided a display unit as defined in claim 14, comprising a shelf support structure and a plurality of shelves according to the second aspect of the invention supported by said shelf support structure. Embodiments of the present invention will now be described, by way of example only, with reference to the Figures, in which:
Figure 1 shows an arrangement of display shelves suitable for incorporation of the display shelf of the present invention;
Figure 2 shows a perspective view of a shelf tray arrangement, which is not part of the invention;
Figure 3A shows a cross-sectional side view of a shelf tray in a display position;
Figure 3B shows an enlargement of the lighting unit, which is not part of the invention, of Figure 3A;
Figure 4A shows a cross-sectional side view of a shelf tray of Figure 3A, provided on a shelf, the tray being in a service position;
Figure 4B shows an enlargement of the lighting unit of Figure 4A;
Figure 5 shows a perspective view of a shelf tray component;
Figure 6A shows a perspective view of a shelf tray component;
Figure 6B shows a cross-section of the shelf tray component of Figure 6A;
Figure 7 shows a perspective view of a shelf tray component;
Figure 8 shows an exploded view of a shelf comprising a lighting unit according to the invention,
Figure 9 shows a side section view of the Figure 8 arrangement;
Figure 10 shows an enlarged view of the front of the shelf of Figure 9 in the display position; and
Figure 11 shows an enlarged view of the front of the shelf of Figure 9 in the service position.

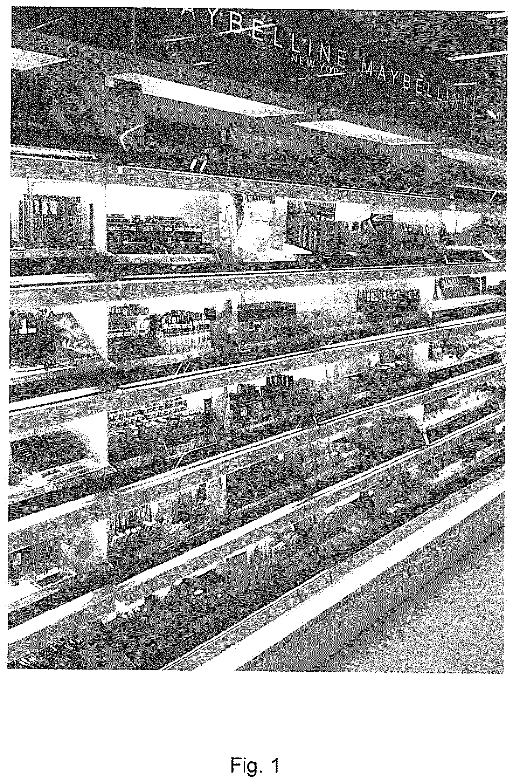

Fig. 1 shows a retail shelving system composed of several display units. A display unit comprises a plurality of wall mounted or panel mounted shelves. A display unit may be provided in different heights depending on the retail environment. The typical maximum height for self access shelving units is within the average customer's arms reach, e.g. about 2 metres high. Shelving units may be smaller, e.g. shoulder high. Several horizontal or inclined shelves are carried on a display unit. The shelves are vertically spaced apart so as to allow an appealing product offering. To maximise shelving space, shelves are provided at ankle and knee level. Illumination systems are provided to improve the visibility of the products.

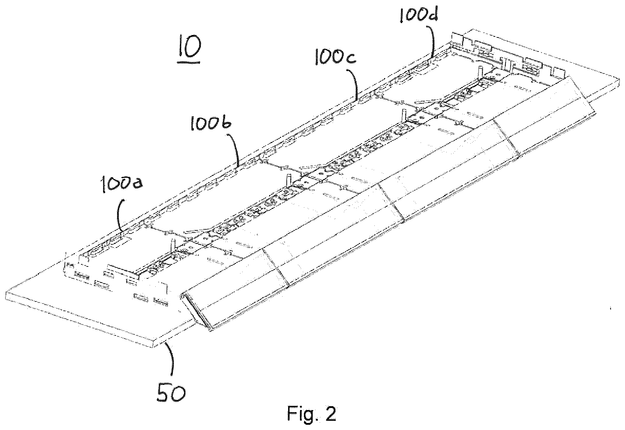

Fig. 2 shows a shelf tray arrangement 10, which is not part of the invention, provided on a shelf 50. Shelf 50 may be a shopfit glass or solid shelf. Shelf 50 may be a horizontal shelf or may be inclined at an angle. Shelf tray arrangement 10 comprises a plurality of individual shelf trays 100 comprising individual shelf tray units 100a, 100b, 100c, 100d, which can be connected to one another.

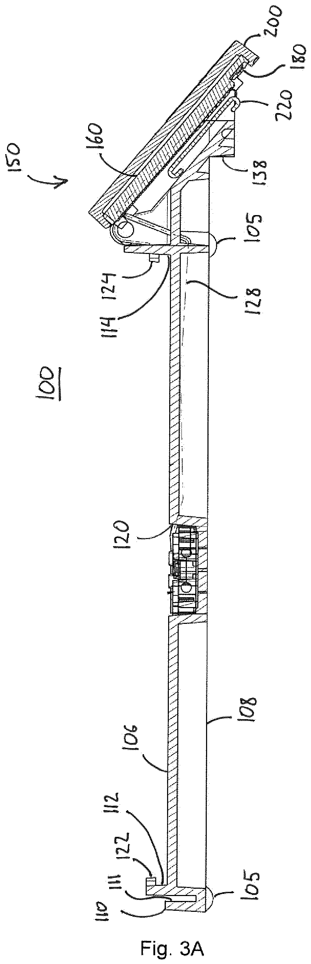

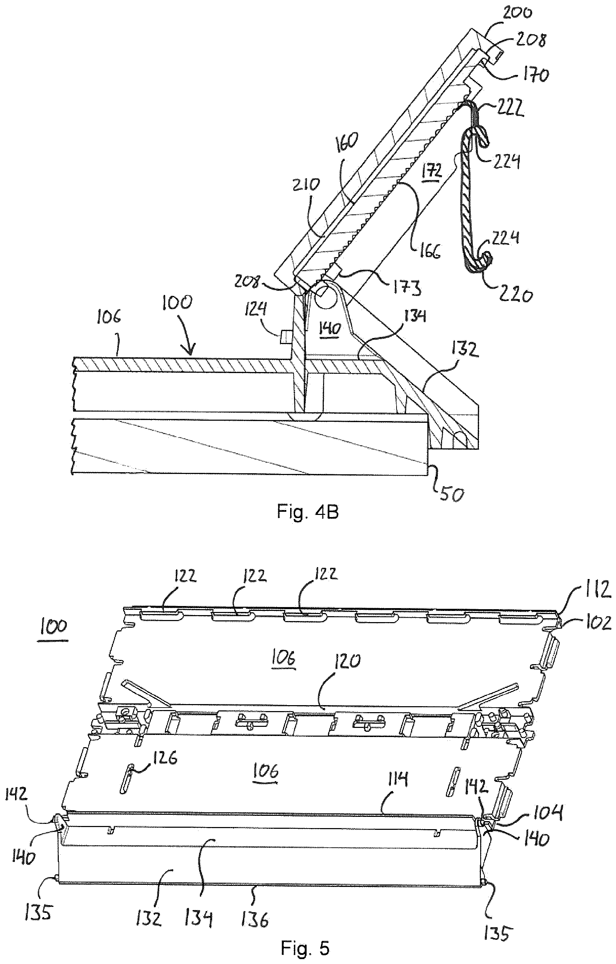

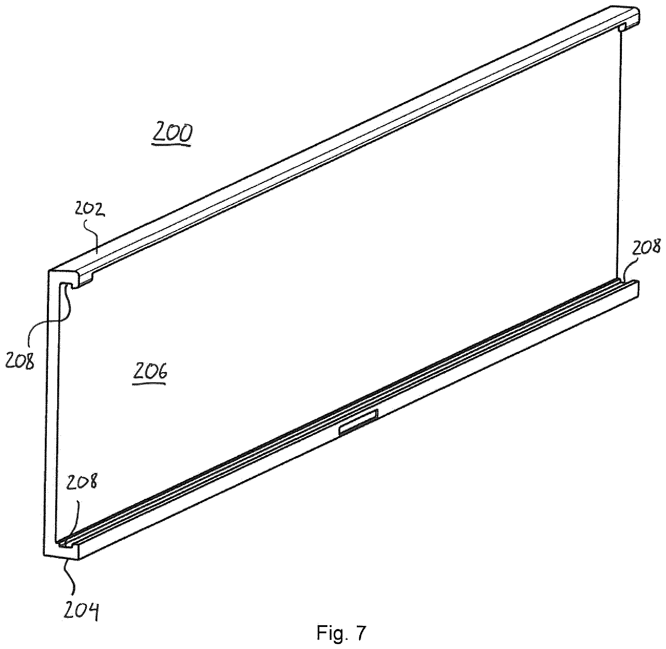

Figs. 3A to 4B show representative cross-sections of an assembled shelf tray 100 not according to the invention, whereas Figs. 5 to 7 show perspective views of components of shelf tray 100. Corresponding numerals are used throughout Figs. 2 to 7. Shelf tray 100 may have any width. However, shelf trays of about 20 to 30 centimetres width have been found to be particularly suitable for a modular system.

An assembled shelf tray 100 is shown in Figs. 2 to 4B, and the tray component in isolation is shown in Fig. 5. Shelf tray 100 comprises a first end 104 and a second end 102. In use, when the shelf tray 100 is installed in a retail environment, the first end 104 faces the customer and the second end extends away from the customer, e.g. towards the rear of a shelving unit. Thus, the first end defines a front side which is the customer-facing end. A flat portion 106 forms the upper surface of the shelf tray on which products or installations may be arranged.

Approximately mid-way between the first end 104 and the second end 102, a recess is formed in the upper surface 106 of the tray 100 to define a channel 120. Channel 120 extends laterally, parallel to the front side, and accommodates electrical tracking and wiring. The electrical components are part of a bus bar system. The shelf tray comprises one or more channels 126 for wiring 128 to be provided between the bus bar channel 120 and the electrical components.

On its underside, shelf tray 100 is provided with sets of feet 105 to support the shelf tray. The feet 105 may be height adjustable. The feet 105 may be made of a material that inhibits slipping, such as rubber. Preferably, the tray 100 is a plastics moulding and the underside of the tray 100 may comprise hollow portions to reduce the overall unit weight and material cost. The sides of shelf tray 100 are formed by skirting walls or reinforcing ribs 108 which may extend over a thickness 118. The shelf tray may be provided with additional reinforcing ribs 108.

Wall portions 112 and 114 extend upwards along the first and second ends 102, 104. The wall portions 112, 114 extend beyond the upper surface 106 and facilitate fixation of display elements on the upper surface. Each wall portion 112, 114 comprises one or more inward-facing protrusions 122, 124. The gaps between the protrusions and the upper surface 106 define a guide channel which allows surface fixtures to be slotted onto the upper surface 106.

Along the first end, one or more upward-facing hooks 110 extend upward behind the wall portion 112. The gap defined between the hooks 110 and wall 112 defines a slot 111 in which a panel may be accommodated. The panel may be a substrate for a graphic display.

The first end 104 comprises a forward facing front section 130. The front section 130 comprises a support 136 extending forward from the wall 114 at the height of upper surface 106. The support 136 has a first portion 134 and a second portion 132. The first portion 134 is a flat corresponding to the level of the top surface 106 which extends horizontally forward until it segues into the second portion 132 at a chamfer edge running parallel to the wall 114. The second portion 132 chamfers downwards from the horizontal portion 134 and extends forward and below the lower edge of the reinforcing ribs 108. The underside of the second portion 132 comprises a stepped edge 138 which provides a locating surface for location on a shelf 50.

When installed, the shelf tray 100 rests on the feet 105, and the locating surface of the stepped edge 138 can be pushed against the front edge of a shelf 50 on which the shelf tray 100 is to be provided. Thereby, alignment of the shelf tray 100 with the shelf 50 is facilitated. This aids achieving a neat appearance of the display shelf assembly. Further, the stepped edge 138 allows a configuration to be ensured in which the aligned front edge protrudes forward of a shelf 50.

On either side of the first portion 134 there is a side wall 140. Each side wall 140 carries a laterally outward facing protrusion 142 which serves as a hinge joint to carry the lighting unit 150 described below. On either side of the front section is a further laterally protruding support pin 135 which serves as a rest or stop for the lighting unit 150 as described below.

As shown in Figs. 3A to 4B, the lighting unit 150 is comprised of a diffuser 160, a LED strip 180, and a cover 200. The lighting unit 150 may further comprise an information panel 220.

The diffuser 160 is a moulded panel made of an acrylic-based clear compound that is optimised for its light transmitting properties. Suitable compounds are, for example PMMA's or modified PMMA's, such as those sold under the trade name Plexiglas (RTM), available from Evonik Industries AG, 64293 Darmstadt, Germany.

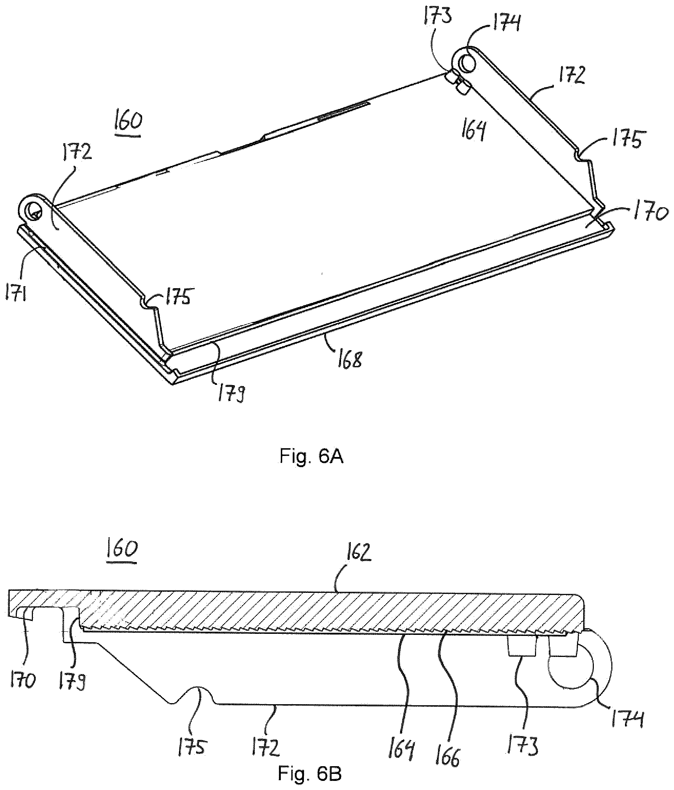

As shown in Fig. 6A, the diffuser 160 is substantially rectangular and has an elongate front face 162, an elongate rear face 164, an elongate upper edge, and an elongate lower edge 168. The rear face 164 has a surface texture 166 applied thereto. Surface texture 166 may be provided in the form of a plurality of laterally extending ridges covering at least a part of the rear face 164. Other surface treatment methods, for example shot blasting or moulded 3D textures may be employed to create the surface texture 166. Alternatively, a reflective panel may be provided on the rear surface 164 to prevent light fromescaping therethrough and directing the light back into the diffuser. The reflective panel may be white or metallic and may be adhered to the rear surface 164.

A laterally extending longitudinal recess 170 is provided near the lower edge 168 on the rear face 164 of the diffuser 160. The recess 170 is dimensioned to receive an LED strip 180.

The diffuser 160 has two laterally depending side panels 172. Each side panel has an aperture 174 which is shaped to mate with the protrusion 142 of the side wall 140. A wire track 171 runs inboard or outboard of each side panel 172 and a wire trap 173 is provided near the aperture 174. The side panels 172 are spaced apart from another so as to allow them to be snap-fitted onto the protrusions 142 of side walls 140, thereby forming a hinged connection 178 allowing the diffuser 160 to pivot relative to the support 136. The edges of each side panel 172 have a notch 175 spaced from the aperture 174. Each notch 175 is spaced from the rear face 164. Wiring 128 that connects the LED strip 180 to the bus bar channel 120 is held near the hinged connection 178 by virtue of the wire trap 173 and leads from there through a wire track 171 to the LED strip 180. This arrangement helps ensuring that the wiring 128 required to supply power to the LED strip 180 does not impede the functionality of the lighting unit 150.

A cover 200 is attached to the diffuser 160. The cover 200 is a generally rectangular elongate body with a U-shaped cross-section, having side walls 202, 204. The side walls 202, 204 define a space 206 between them. The elongate dimension of cover 200 corresponds to that of the diffuser 160 onto which it is to be mounted. However, the height of the cover 200 is such that the diffuser 160 can be held in the space 206 defined by the side walls 202, 204. Walls 202, 204 comprise internal grooves 208 in which the elongate upper and lower edges of the diffuser 160 are retained. The grooves 208 are spaced from the inner surface of the cover 200. Thus, when the cover 200 is snapped onto the diffuser 160, the diffuser is retained at a predetermined distance defining a gap 210 between the inner surface of the cover 200 and the outer face 162 of the diffuser. The predetermined distance is wide enough to accommodate a substrate having a graphic printed thereon. The gap 210 opens to the sides of the lighting unit 150 so that a printed substrate can be inserted laterally. Alternatively or concurrently, at least part of the cover 200 may be provided with an information-containing element 212. The information-containing element 212 may be a self-adhesive panel. It may be decorative. The information-containing element may be applied to the outside of the cover 200. The self-adhesive panel may comprise a logo that is translucent so as to be suitable for back-illumination. The logo may have a dark-coloured vignette surround that is not fully opaque so as to enable it to glow slightly when illuminated from behind, thereby allowing various degrees of a silhouette effect to be achieved.

The hinged connection 178 allows the lighting unit 150 to be pivoted between a display position and a service position. In the display position the hinged connection 178 allows the diffuser 160 to depend from the support 136. In its display position, the diffuser 160 rests on the support pins 135 supporting the corresponding notches 175 and is thus generally aligned with the chamfered support portion 132. Because the notches 175 are spaced apart from the rear face 164, a gap 176 is defined between the upper surface of support portion 132 and the rear face 164 when the diffuser 160 lies on the support pins 135.

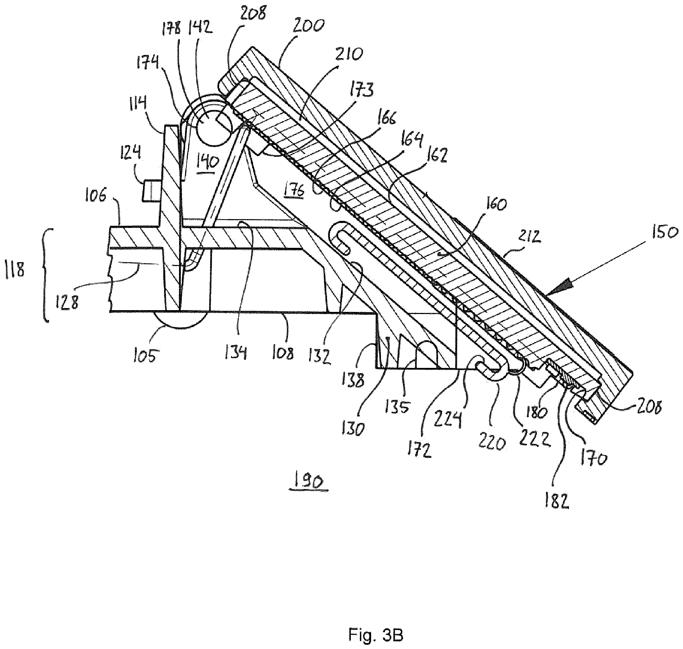

Fig. 3B shows an embodiment comprising an information panel 220 normal omitted from view. Information panel 220 is connected to the rear face 162 of the diffuser 160 by a live hinge 222. The live hinge 222 may be co-extruded as part of the information panel 220 and may comprise an elastomer material which provides flexibility and thus allows the information panel 220 to be pivoted relative to the diffuser 160 repeatedly while avoiding stress fracture. The information panel 220 comprises a slot or channel 224 in which an information-containing substrate can be retained.

Still referring to Fig. 3B, gap 176 is dimensioned to accommodate the information panel 220 in the display position, i.e., when the lighting unit 150 rests on the support pins 135. The information panel 220 is covered by the diffuser 160 / cover 200. The thickness of the information panel 220 can be variable but is designed to be accommodated without difficulty within the gap 176 between the support surface 136 and the rear face 164. By way of this arrangement, during normal use, i.e., in the display position shown in Figs. 3A and 3B, the information panel 220 can remain hidden from view, e.g. when a substrate is provided in slot 210.

LED strip 180 comprises a strip 182 carrying a plurality of side-illuminating LEDs. The individual LEDs are grouped densely together on one side of the strip. In an embodiment, the LEDs are spaced about 8 millimetres apart from another. On its other side the strip 182 comprises an adhesive layer which allows the strip 180 to be attached within the recess 170. The strip is opaque and may be made of a white or other reflective material. The strip may be a flexible circuit board that also contains other electronic components needed to control the LEDs. The LED strip 180 is oriented in the recess 170 so that the LEDs face a side wall 179 of the recess 170 and such that at least part of the light emitted from the LEDs is directed through the side wall 179 in a direction towards the elongate upper edge of the diffuser 160.

In its display position, the diffuser 160 rests on the support pins 135. The height of the diffuser 160 exceeds that of the support surface 136 so that the rear face 164 partially hangs over the front section 130. In particular, the recess 170 in which the LED strip 180 is provided hangs over the front edge of the front section 130. The LEDs of LED strip 180 are thus not concealed by the front section 130.

In operation, the LEDs of the lighting unit 150 emit light towards the elongate upper edge end of the diffuser 160 and against the inner side wall 179. A portion of light is directed into the diffuser 160, and passes straight through the diffuser 160. Diffuser 160 has a higher optical density than air and thus light within the diffuser 160 has an increased tendency to undergo total internal reflection. In the exemplary embodiment the surface texture 166 comprises an arrangement of a plurality of ridges which are shown as angular features in the drawings. These ridges interfere with the internal reflection of light reaching passing through the diffuser as they change the angle of incidence of the light upon the rear face and reflect and/or bend the light so that it passes back into the diffuser from the ridges at an angle that is too steep for internal reflection to occur when the light reaches the front face of the diffuser and a portion of the light is therefore enabled to escape the front face to back light the graphic located in the gap 210 between the diffuser 160 and the lighting unit 150. It will be appreciated by the skilled person that different surface textures aside from ridges can be used, providing that the effect is to disrupt the total internal reflection of light from the LED's so that light is enabled to escape the front face 162 of the diffuser 160.

As an alternative, or in addition to the surface texture, a polymer may be used which contains an additive which has light dispersing effects, suitable polymers are, for example, Plexiglas (RTM) LED LD12, Plexiglas (RTM) LED LD24, Plexiglas (RTM) LED LD48, or Plexiglas (RTM) LED LD96, all available from available from Evonik Industries AG. These polymers are a transparent or translucent main polymer having a filler of transparent or translucent particles having a different refractive index from that of the main polymer. As light passes therethrough it is bent as it encounters the filler particles and is scattered, thereby enabling light to be emitted from the diffuser substantially perpendicular to the direction of light travel therethrough. However as both the main polymer and the filler are transparent or translucent the material also allows for some of the light to pass therethrough without being deflected. Other polymers having the same effect may also be used.

The front face 162 is preferably flat, as shown, which facilitates the exit of light radiation impinging orthogonally to the plane of the front face 162, or impinging at any angle. Thus, the combination of the refractive index and the geometric arrangement of the diffuser 160 provide a reflection mechanism which causes a sufficient proportion of the LED-emitted light to be deflected so that it passes through the front face 162. This allows a substrate provided in the gap 210 to be backlit indirectly by the LED strip 180. The surface texture 166 assists in increasing the intensity of the back-light illumination to be provided.

In addition to the internal reflection mechanism some light may exit the diffuser 160 through the rear face 162. This light is not projected into a well-defined direction and can result in a pleasant diffuse illumination of the tray. However, it may not be desirable for this light to exit from the diffuser 160 and accordingly a reflective surface may be applied to the rear face 164 of the diffuser, for example a white or metallic surface. This could be adhered to the rear face 164 or may be applied as a coating, to promote the internal reflection of light from the rear face. A portion of the LED light is transmitted through the diffuser 160 and exits the diffuser 160 at the elongate upper edge which allows products on the shelf tray 100 to be illuminated creating an up-lighting effect. The luminosity of the LED strip 180 is improved by densely packing the array of LEDs.

In addition to light being transmitted through or along the diffuser 160, a portion of the light emitted by LED strip 180 is reflected within the recess 170. The reflective properties of the strip 182, together with reflection by the walls of the recess and in boundaries between the diffuser 160 and the lighting unit 150, cause light to be emitted out of the recess 170 so that when the lighting unit 150 is in its display position, the light emitted from the recess 170 is emitted in a downward direction. The locating surface of the stepped edge ensures that the shelf tray protrudes over a shelf 50 on which it is provided. The combination of the locating surface and the unconcealed recess 170 allows the light reflected out of recess 170 to illuminate areas below the shelf tray 100, and consequently also areas below shelf 50. As can be seen in Figure 1 cosmetic display shelves are traditionally provided in stacks of shelves and accordingly the lighting unit can illuminate products on display on the shelf below that on which it is located. The cross-section of recess 170 can be configured to optimise the light distribution 190 (indicated in Fig. 3B) that illuminates the area underneath shelf 50. This provides more design freedom to achieve an illumination angle larger than that of hitherto known systems. In particular, as the diffuser 160 is at an inclined angle and as the sidewalls of the recess 170 are substantially perpendicular to the diffuser 160, internal reflection of light within the recess 170 will cast a light distribution 190 that is thrown backwards at a wide spread angle allowing products towards the back of the shelf below to be evenly illuminated. The centre of the light spread may be oriented substantially normal to the diffuser and portions of the light spread horizontally and vertically. Ways of modifying the surface and/or the geometry of the recess 170 will be apparent to the skilled person to allow the angle and intensity of the light distribution 190 below the shelf 50 to be altered.

Thus, in operation, the lighting unit 150 provides a multi-directional lighting solution, which enables back lighting of a display panel at the front of a shelf, illumination from below of products at the front of the shelf, and also down lighting of articles placed on a further shelf located below the lighting unit. This is all achieved with a single strip of LED lights thereby minimising the energy consumption of the lighting unit. Furthermore, by directing the light through the diffuser 160 prior to up-lighting product at the front of the shelf, the minimum distance of the light source from these products is increased. Even though LED's are far more efficient than incandescent or fluorescent lighting, they do still produce some heat and therefore, by increasing the minimum distance of the lighting from the product, heat exposure of the product, to which they would otherwise be exposed, is minimised and the design enables the diffuser and cover to function as a heat sink for the LED's.

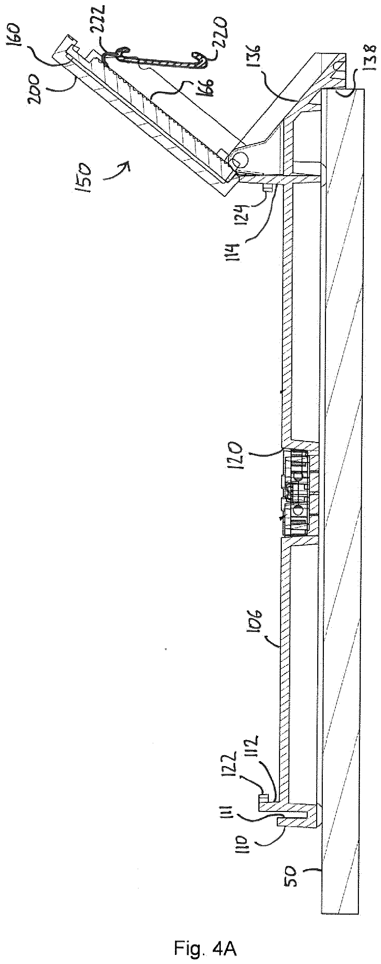

The lighting unit 150 can be pivoted about hinged connection 178 from a display position, shown in Figs. 3A and 3B, to a service position, shown in Fig. 4A and 4B. The shelf tray 100 may comprise a mechanism configured to sense whether or not the lighting unit is in the display condition. The mechanism may alter the illumination behaviour of the LED strip 180 when the lighting unit 150 is pivoted between the display position and the service position. Wiring is laid along the wiring track 171 to avoid interference of wiring 128 with the hinge mechanism.

When the lighting unit 150 is pivoted upwards into its service position, the information panel is not retained within the gap 176 and thus free to hang from the diffuser 160. The information panel 220 allows information to be made available for use by employees while remaining concealed from the customer. Such information can be used for stocking purposes and may comprise barcodes, QR keys or alpha numeric data or product information needed for stock management and restocking. An information panel 220 that depends flexibly from the lighting unit 150 allows the information to be accessed conveniently even if shelves are high up or at a low level, yet be concealed in the display position so that only the required product information is displayed to the customer.

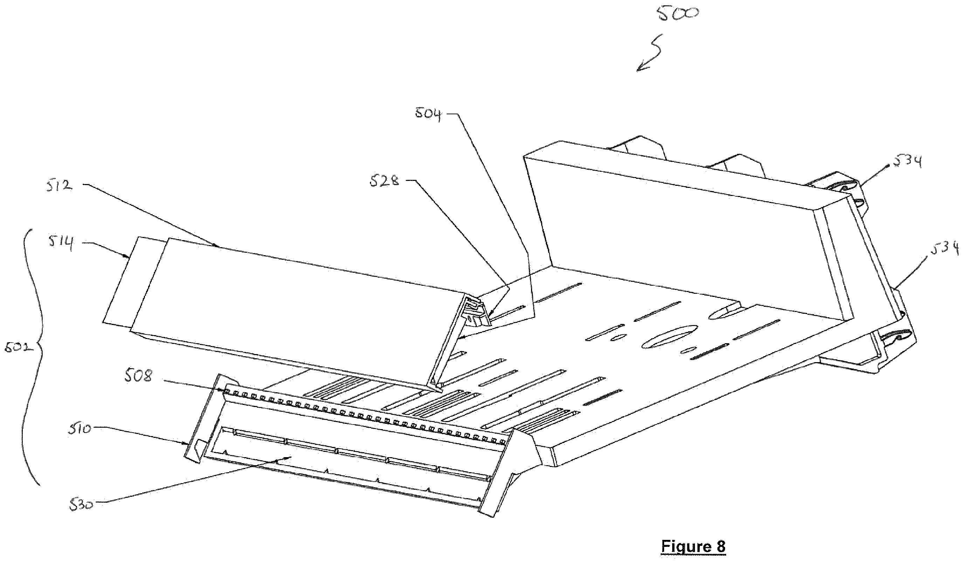

Referring to Figures 8 to 11 a shelf 500 according to the second aspect of the invention is shown. The shelf 500 has towards its front edge (the front edge being the end that in use projects towards the user, a lighting unit 502 according to the first aspect of the invention.

The lighting unit 502 has a transparent or translucent elongate diffuser 504 arranged along it. The diffuser is substantially rectangular and comprises an elongate upper edge, an elongate lower edge, an elongate front face and an elongate rear face. In use the elongate front face faces the user. A recessed channel 506 is provided adjacent to and substantially extending along the elongate upper edge of the diffuser 504.

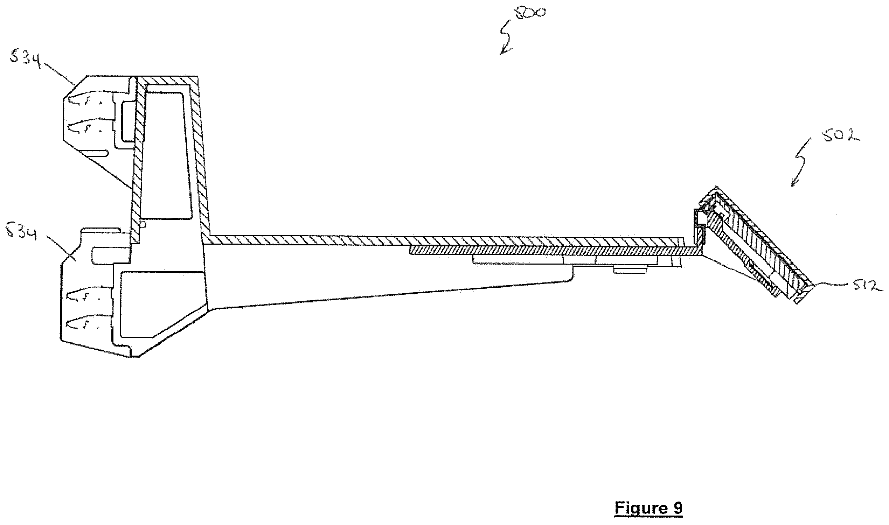

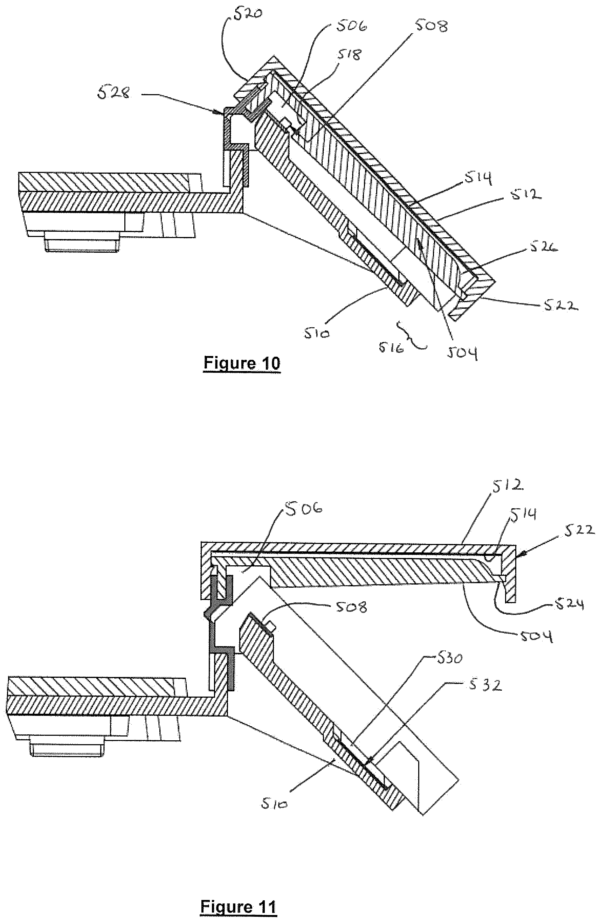

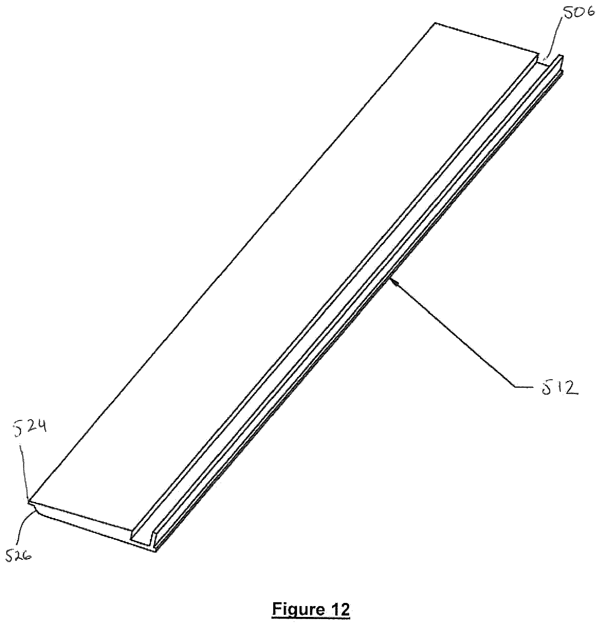

A lighting element 508 is provided attached to a support structure 510 of the lighting unit 502. The lighting element 508 is positioned such that with the lighting unit 502 in the service position, as shown in Figures 9 and 10, the lighting element locates in the recessed channel 508. The lighting element 508 is a LED strip light, i.e. it comprises a narrow circuit board on which a plurality of LED's are mounted. The LED's are orientated on the strip such that, in operation, they emit light in a direction from one elongate edge of the diffuser 504 to the other elongate edge of the diffuser, i.e. they direct light sideways through the diffuser as opposed to in a direction out of the front or rear face of the diffuser.

As described above in relation to the lighting unit of the shelf tray, which is not part of the invention, a portion of light is directed into the diffuser 504, and passes straight through the diffuser 160. Diffuser 160 has a higher optical density than air and thus light within the diffuser 160 has an increased tendency to undergo total internal reflection. In order to increase the amount of light that can escape the front face of the diffuser 504, the diffuser may be moulded from a polymer which contains an additive which has light dispersing effects, suitable polymers are, for example, Plexiglas (RTM) LED LD12, Plexiglas (RTM) LED LD24, Plexiglas (RTM) LED LD48, or Plexiglas (RTM) LED LD96, all available from available from Evonik Industries AG. These polymers are a transparent or translucent main polymer having a filler of transparent or translucent particles having a different refractive index from that of the main polymer. As light passes therethrough it is bent as it encounters the filler particles and is scattered, thereby enabling light to be emitted from the diffuser substantially perpendicular to the direction of light travel therethrough. However as both the main polymer and the filler are transparent or translucent the material also allows for some of the light to pass therethrough without being deflected. Other polymers having the same effect may also be used. A reflective surface may be applied to at least a part of the rear face of the diffuser 504 to reflect at least some of the light scattered towards the rear elongate face back in a direction towards the front elongate face.

The diffuser 504 may have a tapered rear face that tapers in a direction towards the elongate front face with distance from the top edge. This results in the rear face being angled relative to the direction of travel of light from the LED's towards the bottom elongate edge. This angle increases the angle at which the reflected light in reflected internally and can increase the amount of light escaping the front face of the diffuser 504

A substantially transparent elongate cover 512 is located over the diffuser 504 and defines a gap between it and the diffuser 504 that can receive a display graphic 514. The display graphic may for example be advertising the products or the brand of product on display on the shelf and is designed for back illumination. In this way the display graphic is back lit by the light escaping from the front face of the diffuser 504.

As can be seen, a portion 516 of the lighting unit overhangs the lower end of the support structure 510 at the front of the shelf 500. Light escapes the diffuser 504 in all directions in this region and either emits directly downwards, or is reflected by the internal surfaces of the cover 512, or internal reflection of the diffuser so as to travel in a downwards direction from the overhanging part 516 of the lighting unit also serves to provide a down lighting effect, illuminating product on a shelf or in an area below the shelf on which the lighting effect of the invention is located.

Optionally the support structure 510 may be made of a substantially transparent or translucent material so that light escaping from the back elongate face of the diffuser 504 can pass therethrough so as to also provide a down lighting effect.

In addition to the light emitting in a forward direction through the elongate front face of the diffuser 504 and the light escaping in a downward direction, optionally the lighting element may provide an up lighting effect on product on the shelf to which the lighting unit is attached. As the diffuser 504 and the cover 512 are of transparent or translucent material, a small amount of the light emitting from the LED's will reflect off the side wall 518 of the channel 506 and will emit at an upper edge of the lighting unit 502.

A reflective strip may be attached to the elongate top surface 520 and/or the elongate bottom surface 522 of the cover to increase the internal reflection of light and reduce the amount of light escaping at these points. In particular the use of a reflective strip at the bottom edge will assist in directing the light in the desired directions.

The lower elongate edge of the diffuser 504 may be provided with a shaped profile as shown in the drawings. The narrow tongue 524 fits into a corresponding recess in the cover 512 so as to enable the two parts to snap together, and the remainder of the end of the diffuser is provided with a radiused profile 526. This radiused profile changes the angle of incidence of the light emitted from the LED on this edge section of the diffuser and assists in reflecting light from this section in a downwards direction to enhance the down lighting effect.

The diffuser 504 is attached to the support structure 510 by a hinge 528. The hinge 528 is a live hinge but as will be appreciated traditional type hinges could also be used. The hinge 528 is attached to the diffuser at its elongate upper edge. This allows the diffuser 504, cover 512, and graphic 514 to be pivoted upwards from its display position shown in Figure 10 to a service position shown in Figure 11. The support structure 10 can be provided with a mounting section 530 in which a substrate 532 printed with product relevant information can be mounted. The product relevant information may include details of the product to be placed on the shelf and may contain barcodes or other readable information relevant to those products that can be read during, for example, stocktaking. As can be seen from Figures 10 and 11, the lighting strip is attached to, and extends from, the support element 10 such that, when the diffuser 504 is pivoted about its hinge 528 into the display position the lighting strip 508 extends from the support structure 510 into the recessed channel 506 in the diffuser so that it can light it. The shelf is provided with attachment means 534 by which it can be attached to an upright structure from which the shelf will project. A plurality of the shelf units may be provided on a single structure to provide a stack of shelves for use in a retail environment.

## Claims

1. A lighting unit (502) for the front edge of a display shelf (500), the lighting unit comprising:
a transparent or translucent elongate, substantially rectangular diffuser (504) comprising an elongate upper edge, an elongate lower edge,
an elongate front face and an elongate rear face, said diffuser having a recessed channel (506) adjacent to and substantially extending along one of the elongate upper and lower edge; a lighting element (508) located in said recessed channel (506), said lighting element comprising a plurality of light emitting diodes attached to a circuit board to form a light strip, wherein the light emitting diodes are oriented to direct light from said recess through said diffuser (504) in a direction from one elongate edge towards the other elongate edge; and
a substantially transparent elongate cover (512) located over the diffuser (504) and defining a gap there between for receiving a display graphic; **characterised in that**
the diffuser tapers in a direction from one elongate edge to the other elongate edge so that the thickness of the diffuser reduces with distance from the light strip; whereby
said diffuser (504) is configured to scatter a portion of the light passing therethrough towards the cover (512) so as to back light a display graphic in said gap; and a portion of the light is directed by said lighting unit in a downward direction.

2. The lighting unit (502) of claim 1 wherein said portion of the light directed by said lighting unit (502) in a downward direction comprises reflected light.

3. The lighting unit (502) of claim 1 or claim 2 wherein said diffuser (504) transmits a portion of the light therethrough to be emitted at the elongate upper edge thereof.

4. The lighting unit (502) of claim 1 wherein said recessed channel (506) is located adjacent the elongate upper or lower edge.

5. The lighting unit (502) of any preceding claim wherein the light emitting diodes are side emitting light emitting diodes that emit light from one side thereof and said light strip is arranged in said recess in an orientation such that the light emitting side of the diodes are directed towards the other of the upper and lower edge.

6. The lighting unit (502) according to any one of the preceding claims wherein one face of the diffuser (504) is provided with a surface texture to increase the amount of light scattered towards the cover.

7. The lighting unit (502) according to any preceding claim further comprising a reflective strip attached to one or more of the elongate rear face and the elongate lower edge.

8. The lighting unit (502) according to any one of the preceding claims wherein the diffuser (160, 504) comprises a first material comprising a polymer containing particles of a second transparent or translucent material having a different refractive index than the first material.

9. The lighting unit (502) according to any one of the preceding claims further comprising a support structure (510) to which the diffuser (504) and cover are attached by a hinge (528) located adjacent the elongate upper edge so as to enable the diffuser (504) and cover it to be pivoted upwards from a display position to a service position.

10. The lighting unit (502) of claim 9 wherein the lighting strip is attached to, and extends from, the support element in a position such that, when the lighting element is in its display position the lighting strip extends from said support structure into the recessed channel in the diffuser.

11. The lighting unit (502) of claim 9 or claim 10 wherein, with the diffuser and cover in the display position, the support structure (510) supports said diffuser and cover at an incline.

12. A shelf (500) for displaying products, said shelf comprising:
a substantially horizontal platform;
a lighting unit (502) according to any preceding claim; wherein
said lighting unit (502) at least partially overhangs the front section of the substantially horizontal platform.

13. The shelf (500) according to claim 12 wherein the shelf further comprises:
a shelf tray to which the support structure of the lighting unit is attached, said shelf tray received on said substantially horizontal platform.

14. A display unit comprising a shelf support structure and a plurality of shelves according to claim 12 or claim 13 supported by said shelf support structure.

## Patentansprüche

1. Beleuchtungseinheit (502) für die Vorderkante eines Verkaufsregals (500), wobei die Beleuchtungseinheit umfasst:
einen durchsichtigen oder durchscheinenden langgestreckten, im Wesentlichen rechteckigen Diffusor (504), der eine langgestreckte obere Kante, eine langgestreckte untere Kante, eine langgestreckte Vorderseite und eine langgestreckte Rückseite umfasst, wobei der Diffusor einen ausgesparten Kanal (506) aufweist, der an eine der langgestreckten oberen und unteren Kanten angrenzt und sich im Wesentlichen entlang derselben erstreckt;
ein in dem ausgesparten Kanal (506) angeordnetes Beleuchtungselement (508), wobei das Beleuchtungselement eine Vielzahl von Leuchtdioden umfasst, die an einer Leiterplatte angebracht sind, um ein Leuchtband zu bilden, worin die Leuchtdioden so ausgerichtet sind, dass Licht aus der Aussparung durch den Diffusor (504) in einer Richtung von einer langgestreckten Kante zur anderen langgestreckten Kante geführt wird; und
eine im Wesentlichen durchsichtige langgestreckte Abdeckung (512), die über dem Diffusor (504) angeordnet ist und dort einen Spalt zur Aufnahme einer Anzeigegrafik definiert; **dadurch gekennzeichnet, dass**
der Diffusor sich in einer Richtung von einer langgestreckten Kante zur anderen langgestreckten Kante verjüngt, sodass die Dicke des Diffusors mit dem Abstand vom Leuchtband abnimmt; wobei
der Diffusor (504) so konfiguriert ist, dass ein Anteil des ihn passierenden Lichts in Richtung der Abdeckung (512) gestreut wird, um dadurch eine Anzeigegrafik in dem Spalt von hinten zu beleuchten; und ein Anteil des Lichts durch die Beleuchtungseinheit nach unten gerichtet wird.

2. Beleuchtungseinheit (502) nach Anspruch 1, worin der durch die Beleuchtungseinheit (502) nach unten gerichtete Anteil des Lichts reflektiertes Licht umfasst.

3. Beleuchtungseinheit (502) nach Anspruch 1 oder Anspruch 2, worin der Diffusor (504) einen Anteil des Lichts durchlässt, damit es an seiner langgestreckten oberen Kante emittiert wird.

4. Beleuchtungseinheit (502) nach Anspruch 1, worin der ausgesparte Kanal (506) an die langgestreckte obere oder untere Kante angrenzend angeordnet ist.

5. Beleuchtungseinheit (502) nach einem der vorhergehenden Ansprüche, worin die Leuchtdioden seitlich emittierende Leuchtdioden sind, die von einer Seite derselben Licht emittieren, und das Leuchtband in der Aussparung in einer solchen Ausrichtung angeordnet ist, dass die Licht emittierende Seite der Dioden auf die andere der oberen und unteren Kante gerichtet ist.

6. Beleuchtungseinheit (502) nach einem der vorhergehenden Ansprüche, worin eine Seite des Diffusors (504) mit einer Oberflächentextur versehen ist, um die Menge des zur Abdeckung gestreuten Lichts zu erhöhen.

7. Beleuchtungseinheit (502) nach einem der vorhergehenden Ansprüche, ferner ein reflektierendes Band umfassend, das an einer oder mehreren der langgestreckten Rückseite und der langgestreckten unteren Kante angebracht ist.

8. Beleuchtungseinheit (502) nach einem der vorhergehenden Ansprüche, worin der Diffusor (160, 504) ein erstes Material umfasst, das ein Polymer umfasst, welches Partikel eines zweiten durchsichtigen oder durchscheinenden Materials mit einem anderen Brechungsindex als das erste Material enthält.

9. Beleuchtungseinheit (502) nach einem der vorhergehenden Ansprüche, ferner eine Trägerstruktur (510) umfassend, an welcher der Diffusor (504) und die Abdeckung durch ein Scharnier (528) angebracht sind, das an die langgestreckte obere Kante angrenzend angeordnet ist, um dadurch zu ermöglichen, dass der Diffusor (504) und die Abdeckung von einer Anzeigeposition nach oben in eine Wartungsposition geschwenkt werden können.

10. Beleuchtungseinheit (502) nach Anspruch 9, worin das Leuchtband an dem Trägerelement angebracht ist und sich von diesem in einer solchen Position erstreckt, dass sich das Leuchtband, wenn sich das Beleuchtungselement in seiner Anzeigestellung befindet, von der Trägerstruktur in den ausgesparten Kanal im Diffusor erstreckt.

11. Beleuchtungseinheit (502) nach Anspruch 9 oder Anspruch 10, worin, wenn der Diffusor und die Abdeckung in der Anzeigeposition sind, die Trägerstruktur (510) den Diffusor und die Abdeckung mit einer Neigung trägt.

12. Regal (500) zum Ausstellen von Produkten, wobei das Regal umfasst:
eine im Wesentlichen horizontale Plattform;
eine Beleuchtungseinheit (502) nach einem der vorhergehenden Ansprüche; worin
die Beleuchtungseinheit (502) den vorderen Abschnitt der im Wesentlichen horizontalen Plattform zumindest teilweise überragt.

13. Regal (500) nach Anspruch 12, worin das Regal ferner umfasst:
ein Regalfach, an dem die Trägerstruktur der Beleuchtungseinheit angebracht ist, wobei das Regalfach auf der im Wesentlichen horizontalen Plattform aufgenommen ist.

14. Anzeigeeinheit, umfassend eine Regalträgerstruktur und eine Vielzahl von Regalen nach Anspruch 12 oder Anspruch 13, die von der Regalträgerstruktur getragen werden.

## Revendications

1. Unité d'éclairage (502) pour le bord avant d'un rayonnage de présentation (500), l'unité d'éclairage comprenant :
un diffuseur allongé sensiblement rectangulaire transparent ou translucide (504) qui comprend un bord supérieur allongé, un bord inférieur allongé, une face avant allongée et une face arrière allongée, ledit diffuseur comportant un canal évidé (506) qui est adjacent soit au bord supérieur allongé, soit au bord inférieur allongé et qui s'étend sensiblement le long de celui-ci ;
un élément d'éclairage (508) qui est localisé dans ledit canal évidé (506), ledit élément d'éclairage comprenant une pluralité de diodes émettrices de lumière qui sont fixées à une carte de circuit de manière à ce qu'elles forment une bande-barrette lumineuse, dans laquelle les diodes émettrices de lumière sont orientées de manière à ce qu'elles dirigent la lumière qui provient dudit évidement au travers dudit diffuseur (504) dans une direction depuis un bord allongé en direction de l'autre bord allongé ; et
un couvercle allongé sensiblement transparent (512) qui est localisé au-dessus du diffuseur (504) et qui définit un espace entre eux pour recevoir un graphisme de présentation ; **caractérisé en ce que** :
le diffuseur présente une diminution dimensionnelle progressive dans une direction qui va depuis un bord allongé jusqu'à l'autre bord allongé de sorte que l'épaisseur du diffuseur soit réduite en fonction de la distance par rapport à la bande-barrette lumineuse ; d'où il résulte que :
ledit diffuseur (504) est configuré de manière à ce qu'il diffuse une partie de la lumière qui passe au travers en direction du couvercle (512) de manière à rétro-éclairer un graphisme de présentation dans ledit espace; et une partie de la lumière est dirigée par ladite unité d'éclairage dans une direction vers le bas.

2. Unité d'éclairage (502) selon la revendication 1, dans laquelle ladite partie de la lumière qui est dirigée par ladite unité d'éclairage (502) dans une direction vers le bas comprend une lumière réfléchie.

3. Unité d'éclairage (502) selon la revendication 1 ou la revendication 2, dans laquelle ledit diffuseur (504) transmet une partie de la lumière au travers de lui-même de telle sorte qu'elle soit émise au niveau de son bord supérieur allongé.

4. Unité d'éclairage (502) selon la revendication 1, dans laquelle ledit canal évidé (506) est localisé de sorte qu'il soit adjacent au bord supérieur ou au bord inférieur.

5. Unité d'éclairage (502) selon l'une quelconque des revendications qui précèdent, dans laquelle les diodes émettrices de lumière sont des diodes émettrices de lumière à émission latérale qui émettent de la lumière depuis l'un de leurs côtés et ladite bande-barrette lumineuse est agencée dans ledit évidement selon une orientation qui est telle que le côté d'émission de lumière des diodes soit dirigé en direction de l'autre bord pris parmi le bord supérieur et le bord inférieur.

6. Unité d'éclairage (502) selon l'une quelconque des revendications qui précèdent, dans laquelle une face du diffuseur (504) est munie d'une texture de surface de manière à augmenter la quantité de lumière qui est diffusée en direction du couvercle.

7. Unité d'éclairage (502) selon l'une quelconque des revendications qui précèdent, comprenant en outre une bande réfléchissante qui est fixée sur une ou plusieurs partie(s) constitutive(s) prise(s) parmi la face arrière allongée et le bord inférieur allongé.

8. Unité d'éclairage (502) selon l'une quelconque des revendications qui précèdent, dans laquelle le diffuseur (160, 504) comprend un premier matériau qui comprend un polymère qui contient des particules d'un second matériau transparent ou translucide qui présente un indice de réfraction différent de celui du premier matériau.

9. Unité d'éclairage (502) selon l'une quelconque des revendications qui précèdent, comprenant en outre une structure de support (510) à laquelle le diffuseur (504) et le couvercle sont fixés au moyen d'une charnière (528) qui est localisée de sorte qu'elle soit adjacente au bord supérieur allongé de manière à permettre le pivotement du diffuseur (504) et du couvercle vers le haut depuis une position de présentation jusqu'à une position de service.

10. Unité d'éclairage (502) selon la revendication 9, dans laquelle la bande-barrette lumineuse est fixée à l'élément de support et elle s'étend depuis celui-ci dans une position qui est telle que, lorsque l'élément d'éclairage est dans sa position de présentation, la bande-barrette lumineuse s'étende depuis ladite structure de support à l'intérieur du canal évidé qui est ménagé dans le diffuseur.

11. Unité d'éclairage (502) selon la revendication 9 ou la revendication 10, dans laquelle, tandis que le diffuseur et le couvercle sont dans la position de présentation, la structure de support (510) supporte ledit diffuseur et ledit couvercle selon une inclinaison.

12. Rayonnage (500) pour présenter des produits, ledit rayonnage comprenant :
une plate-forme sensiblement horizontale ;
une unité d'éclairage (502) selon l'une quelconque des revendications qui précèdent ; dans lequel :
ladite unité d'éclairage (502) est au moins partiellement en surplomb par rapport à la section avant de la plate-forme sensiblement horizontale.

13. Rayonnage (500) selon la revendication 12, dans lequel le rayonnage comprend en outre :
un plateau de rayonnage auquel la structure de support de l'unité d'éclairage est fixée, ledit plateau de rayonnage étant reçu sur ladite plate-forme sensiblement horizontale.

14. Unité de présentation comprenant une structure de support de rayonnage(s) et une pluralité de rayonnages selon la revendication 12 ou 13 qui sont supportés par ladite structure de support de rayonnage(s).
